# FASCICULE DE BREVET EUROPEEN

(11) **EP 2 705 274 B1**
(45) Date de publication et mention de la délivrance du brevet: **02.10.2019**
(21) Numéro de dépôt: 12722462.4
(22) Date de dépôt: 24.04.2012
(51) Int. Cl.: F16F 15/123

(54) **DISPOSITIF D'AMORTISSEMENT DE TORSION COMPORTANT DES ORGANES ÉLASTIQUES DONT CHACUN EST MAINTENU INDIVIDUELLEMENT EN POSITION PAR UNE RONDELLE DE PHASAGE**
DREHSCHWINGUNGSDÄMPFER MIT ELASTISCHEN, ANHAND EINER PHASENUNTERLEGSCHEIBE EINZELN IN POSITION GEHALTENEN ELEMENTEN
TORSION DAMPING DEVICE COMPRISING ELASTIC MEMBERS EACH OF WHICH IS HELD INDIVIDUALLY IN POSITION BY A PHASE WASHER

(30) Priorité: 04.05.2011 FR 1153795; 04.05.2011 FR 1153794; 22.12.2011 FR 1162283
(43) Date de publication de la demande: 12.03.2014
(73) Titulaire: Valeo Embrayages, 80009 Amiens Cedex 2 (FR)
(72) Inventeur: GRIECO, Giovanni, Colombes 92700 (FR); TERMENON, Norberto, F-75019 Paris (FR)
(74) Mandataire: Isarpatent
(86) Numéro de dépôt international: PCT/FR2012/050894
(87) Numéro de publication internationale: WO 2012/150402

(56) Documents cités:
- DE-A1-102008 032 459
- DE-A1-102009 052 202
- FR-A1- 2 940 825
- US-A- 4 775 042
- US-A1- 2009 045 025
- US-B1- 6 343 684

## Description

L'invention concerne un dispositif d'amortissement de torsion entre un arbre moteur et un arbre mené coaxiaux d'orientation axiale dans un système d'accouplement temporaire de véhicule automobile comprenant des organes élastiques et un convertisseur hydrodynamique équipé d'un tel dispositif d'amortissement.

L'invention concerne un convertisseur hydrodynamique comportant une roue de turbine et un embrayage de verrouillage, ledit convertisseur hydrodynamique comportant un dispositif d'amortissement de torsion entre un arbre moteur et un arbre mené coaxiaux d'orientation axiale dans un système d'accouplement temporaire de véhicule automobile, le dispositif comportant :
- un élément d'entrée de couple et un élément de sortie de couple ;
- au moins un premier organe élastique amont à action circonférentielle dont une face d'extrémité circonférentielle amont est susceptible d'être sollicitée par l'élément d'entrée ou de le solliciter ;
- au moins un deuxième organe élastique aval à action circonférentielle dont une face d'extrémité circonférentielle aval est susceptible de solliciter ou d'être sollicitée par l'élément de sortie ;
- au moins une première rondelle radiale de phasage, la face d'extrémité aval de chaque organe élastique amont étant susceptible de solliciter ou d'être sollicitée par une face radiale amont de phasage de la rondelle de phasage, et la face d'extrémité amont de chaque organe élastique aval étant susceptible d'être sollicitée par une face radiale aval de phasage de la rondelle de phasage ou de la solliciter de manière que les deux organes élastiques soient montés en série;
chaque organe élastique étant reçu circonférentiellement entre la face de phasage associée et une face radiale associée de maintien en vis-à-vis de la rondelle de phasage, la distance circonférentielle entre une face de phasage et la face de maintien en vis-à-vis étant au plus égale à la longueur circonférentielle de l'organe élastique au repos,
ledit dispositif caractérisé en ce que:
- chaque rondelle de phasage est liée en rotation avec la roue de turbine tandis que l'élément d'entrée est lié en rotation avec l'embrayage de verrouillage.

Un tel convertisseur comporte par exemple un carter rotatif qui est susceptible de transmettre le couple moteur au dispositif d'amortissement par l'intermédiaire d'un embrayage de verrouillage à friction, parfois appelé "embrayage de lock-up". Le convertisseur comporte aussi une roue de turbine montée rotative à l'intérieur du carter.

Un moteur à explosion présente des acyclismes du fait de la succession des explosions dans les cylindres du moteur. Les moyens amortisseurs de torsion permettent de filtrer ces acyclismes avant de transmettre le couple moteur à une boîte de vitesses. Il est en effet nécessaire d'amortir les vibrations avant qu'elles ne pénètrent dans la boîte de vitesse et ne provoquent une nuisance sonore inacceptable.

Pour ce faire, il est connu d'interposer un dispositif d'amortissement de torsion entre l'arbre moteur et l'arbre de boîte de vitesses. Le dispositif d'amortissement de torsion est généralement agencé dans un système d'embrayage qui permet la liaison temporaire en rotation de l'arbre moteur avec l'arbre de boîte de vitesses. DE 10 2009 052 202 A1 divulgue l'ensemble des caractéristiques du préambule de la revendication 1.

Le dispositif d'amortissement de torsion comporte généralement des organes élastiques à action circonférentielle qui sont interposés entre un élément d'entrée de couple et un élément de sortie de couple.

Dans des dispositifs d'amortissement dits "à large débattement angulaire" ou encore "long travel damper", les organes élastiques sont montés par groupes d'au moins deux organes élastiques en série entre l'élément d'entrée et l'élément de sortie.

Dans une telle configuration, une patte de phasage est interposée entre les deux organes élastiques dudit groupe. Ceci permet d'assurer que les organes élastiques travaillent essentiellement en compression circonférentielle. Les pattes de phasage sont par exemple portées par des rondelles de phasage.

Les organes élastiques adjacents de deux groupes successifs sont reçus dans des logements ou fenêtres de rondelles ayant une fonction de guidage. Chaque fenêtre est délimitée circonférentiellement par une patte d'appui.

Les logements sont formés dans des rondelles ayant une fonction de guidage. Ces rondelles sont par exemple formées par les rondelles de phasage, les pattes d'appui délimitant circonférentiellement chaque fenêtre étant, dans ce cas, des pattes de phasage.

Le dispositif d'amortissement est parfois agencé de manière que la rondelle de phasage soit liée en rotation avec la roue de turbine du convertisseur.

Dans ce cas, lorsque l'entrée du couple moteur se fait par la roue de turbine du convertisseur, certains organes élastiques, les organes amont, ne sont pas sollicités. Ces organes élastiques sont susceptibles de coulisser circonférentiellement dans leur fenêtre, provoquant ainsi l'apparition de bruits parasites.

L'invention propose un dispositif d'amortissement du type décrit précédemment, caractérisé en ce que chaque organe élastique est reçu circonférentiellement entre la face de phasage associée et une face radiale associée de maintien en vis-à-vis de la rondelle de phasage, la distance circonférentielle entre une face de phasage et la face de maintien en vis-à-vis étant au plus égale à la longueur circonférentielle de l'organe élastique au repos.

Ainsi, tous les organes élastiques sont maintenus en place même lorsque seul les organes aval sont sollicités pour le passage du couple.

Selon d'autres caractéristiques de l'invention :
- la distance circonférentielle entre chaque face de phasage et la face de maintien en vis-à-vis est inférieure à la longueur de l'organe élastique au repos de manière que l'organe élastique soit reçu contraint circonférentiellement entre la face de maintien et la face de phasage associée ;
- les organes élastiques sont agencés sur la circonférence d'un même cercle, les faces de phasage étant ainsi portées par une patte radiale commune de phasage de la rondelle de phasage qui est interposée entre l'organe élastique amont et l'organe élastique aval ;
- le dispositif comporte deux rondelles de phasage qui sont agencées axialement de part et d'autres des éléments d'entrée et de sortie et qui sont fixées l'une sur l'autre, les rondelles de phasage comportant des moyens pour emprisonner les organes élastiques afin de les maintenir axialement et radialement en position ;

L'invention concerne un convertisseur hydrodynamique comportant une roue de turbine, un embrayage de verrouillage et un dispositif d'amortissement, chaque rondelle de phasage étant liée en rotation avec la roue de turbine tandis que l'élément d'entrée est lié en rotation avec l'embrayage de verrouillage.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue de face qui représente un dispositif d'amortissement réalisé selon les enseignements de l'invention ;
- la figure 2 est une vue en coupe selon le plan de coupe 2-2 de la figure 1 qui représente notamment des pattes de phasage ;
- la figure 3 est une vue en coupe selon le plan de coupe 3-3 de la figure 1 qui représente notamment une patte d'un élément d'entrée de couple et une patte d'un élément de sortie de couple ;

- la figure 4 est une vue en coupe selon le plan de coupe 4-4 de la figure 1 qui représente notamment un logement pour un organe élastique ;
- la figure 5 est une vue schématique de face qui représente le dispositif d'amortissement de torsion de la figure 1 lorsqu'un couple est transmis depuis l'élément d'entrée jusqu'à l'élément de sortie, les pattes de l'élément d'entrée étant représentées en traits interrompus et les pattes de l'élément de sortie étant représentées en traits interrompus doublés ;
- la figure 6 est une vue schématique similaire à celle de la figure 5 qui représente le dispositif d'amortissement de torsion de la figure 1 lorsqu'un couple est transmis depuis les rondelles de phasage jusqu'à l'élément de sortie.

Pour la suite de la description, on adoptera des orientations :
- axiale dirigée d'arrière en avant selon l'axe de rotation du dispositif d'amortissement, et indiquée par la flèche "A" des figures,
- radiale dirigée orthogonalement à l'axe du dispositif d'amortissement de l'intérieur vers l'extérieur en s'éloignant dudit axe ;
- circonférentielle dirigée orthogonalement à l'axe du dispositif d'amortissement et orthogonalement à la direction radiale.

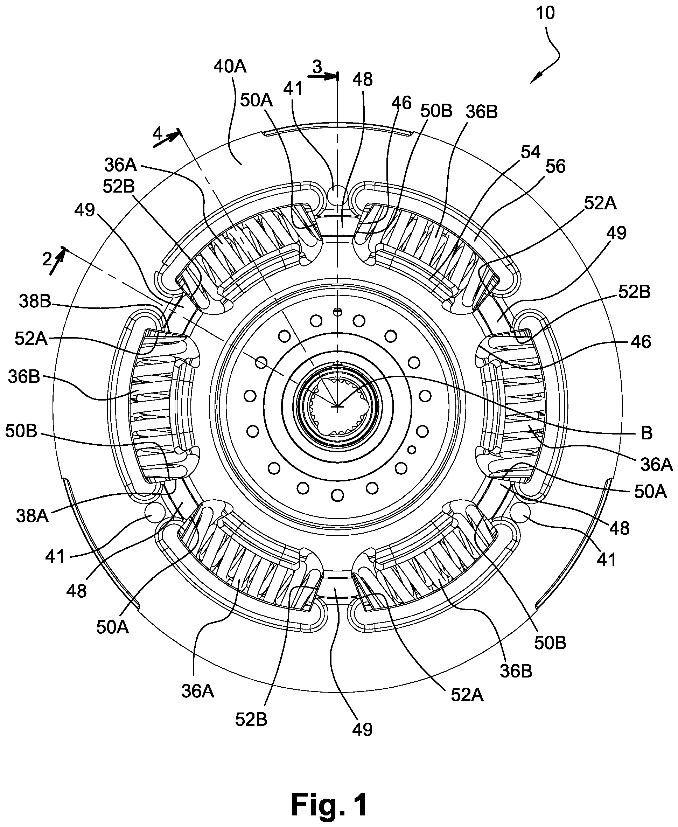

On adoptera par la suite les termes "amont" et "aval" en fonction d'un sens de rotation horaire autour de l'axe "B" selon les figures 1, 5 et 6.

Pour la suite de la description, des éléments présentant des fonctions similaires, identiques ou analogues seront désignés par des mêmes numéros de référence.

On a représenté à la figure 1 un dispositif 10 d'amortissement de torsion réalisé selon les enseignements de l'invention. Le dispositif 10 d'amortissement est destiné à être agencé dans un système d'accouplage temporaire de véhicule automobile.

Le dispositif 10 d'amortissement est destiné à être agencé dans un convertisseur hydrodynamique de couple (non représenté) pour accoupler avec amortissement de torsion le carter du convertisseur de couple à un arbre d'entrée d'une boîte automatique de vitesses.

Le dispositif 10 d'amortissement permet aussi avantageusement d'accoupler avec amortissement de torsion une roue de turbine du convertisseur avec l'arbre d'entrée de la boîte automatique de vitesses.

Le dispositif 10 d'amortissement de torsion permet d'amortir les tensions entre un premier arbre (non représenté) moteur et un deuxième arbre (non représenté) mené coaxiaux d'axe "B" avec amortissement de torsion.

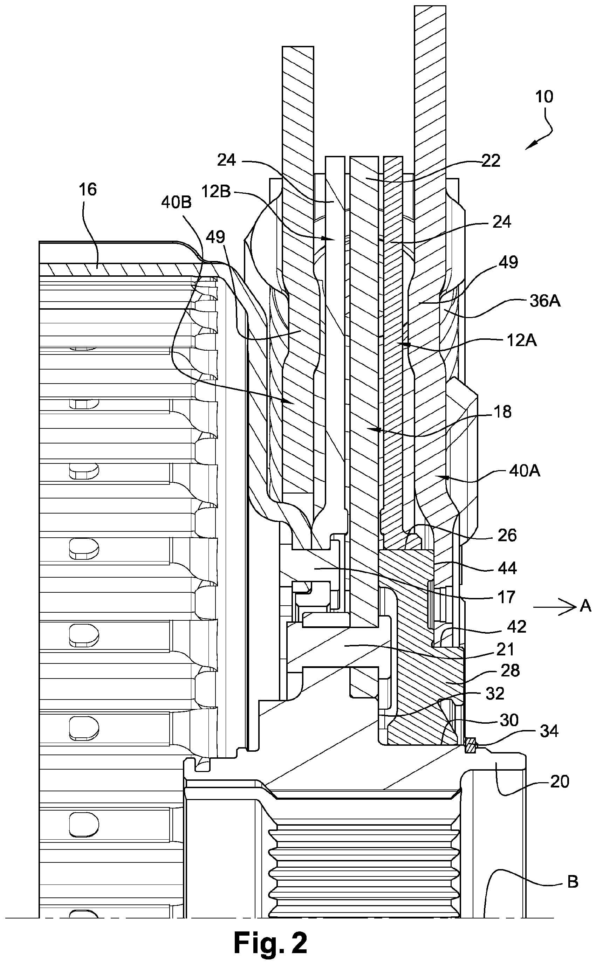

Comme représenté à la figure 2, le dispositif 10 d'amortissement comporte un élément d'entrée de couple qui est ici formé par une première rondelle 12A radiale d'entrée avant et par une deuxième rondelle 12B radiale d'entrée arrière. Les rondelles 12A, 12B d'entrée sont parallèles entre elles.

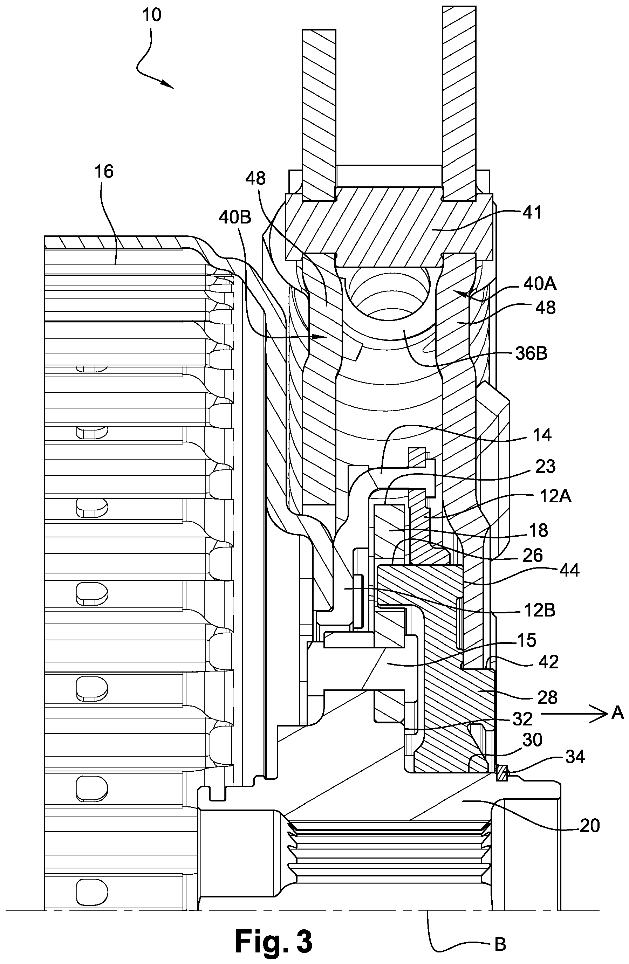

La rondelle 12B d'entrée arrière est liée en rotation avec la rondelle 12A d'entrée avant par l'intermédiaire de bras 14 axiaux, comme cela est représenté à la figure 3.

Les deux rondelles 12A, 12B d'entrée sont liées en rotation au premier arbre moteur par l'intermédiaire d'un moyeu 16 moteur cannelé également appelé moyeu porte-disques destiné à recevoir des disques de friction de l'embrayage de verrouillage montés coulissant sur ledit moyeu. Le moyeu 16 moteur est un élément d'un embrayage de verrouillage qui est susceptible d'accoupler temporairement le carter du convertisseur avec l'arbre d'entrée de boîte par l'intermédiaire du dispositif 10 d'amortissement de torsion. Un tel embrayage de verrouillage, parfois appelé selon la dénomination anglosaxonne "lock-up", est bien connu et ne sera pas détaillé par la suite.

Le moyeu 16 moteur est agencé à l'arrière du dispositif 10 d'amortissement. La rondelle 12B d'entrée arrière est fixée au moyeu 16 moteur par l'intermédiaire de rivets 17 dont un est représenté à la figure 2.

Le dispositif 10 d'amortissement comporte aussi un élément de sortie de couple qui est ici formé par un voile 18 radial de sortie. Le voile 18 de sortie présente une forme de rondelle circulaire coaxiale à l'axe "B".

Le voile 18 de sortie est destiné à être lié en rotation au deuxième arbre mené par l'intermédiaire d'un moyeu 20 mené. Le voile 18 de sortie est lié en rotation avec le moyeu 20 mené par l'intermédiaire de rivets 21 dont un est représenté à la figure 2.

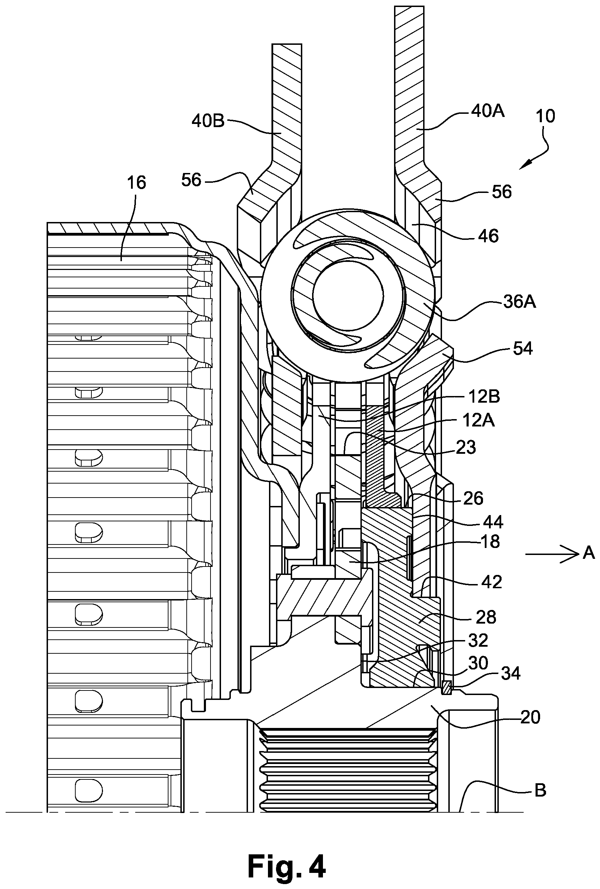

Le voile 18 de sortie présente trois pattes 22 radiales de sortie dont une est visible à la figure 2. Les pattes 22 de sortie sont agencées régulièrement autour de l'axe "B" globalement à 120° les unes des autres. Chaque patte 22 de sortie s'étend radialement en saillie par rapport au bord 23 périphérique extérieur du voile 18 de sortie. Le bord périphérique 23 extérieur est visible aux figures 3 et 4.

Le voile 18 de sortie est agencé axialement entre les deux rondelles 12A, 12B d'entrée. Lorsque les deux rondelles 12A, 12B d'entrée sont assemblées, elles sont écartées d'une distance axiale suffisante pour permettre au voile 18 de sortie de tourner sans frottement entre les deux rondelles 12A, 12B d'entrée.

Chaque rondelle 12A, 12B d'entrée présente un flasque radial qui est pourvu d'un passage central pour permettre le passage de l'arbre mené et le moyeu 20 mené.

Chaque rondelle 12A, 12B d'entrée comporte en outre trois pattes 24 extérieures d'entrée qui sont agencées en coïncidence avec les pattes 22 de sortie du voile 18 de sortie. L'une des pattes 24 d'entrée de chaque rondelle 12A, 12B d'entrée est représentée à la figure 2.

La rondelle d'entrée 12A avant est guidée en rotation par une première face cylindrique extérieure 26 de guidage d'un palier 28 central. Le palier 28 est lui-même monté tournant sur une face cylindrique extérieure 30 d'un tronçon avant du moyeu 20 mené. Les déplacements axiaux du palier 28 sont limités vers l'arrière par une face d'épaulement 32 du moyeu 20 mené, tandis qu'ils sont limités axialement vers l'avant par un anneau élastique 34 qui est monté sur le moyeu 20 mené.

Le dispositif 10 d'amortissement comporte en outre des premiers organes élastiques 36A à action circonférentielle et des deuxièmes organes élastiques 36B à action circonférentielle. Les premiers et deuxièmes organes élastiques 36A, 36B sont ici identiques entre eux.

De manière non limitative, le dispositif 10 d'amortissement comporte ici six organes élastiques 36A, 36B, comme cela est visible à la figure 1. Les organes élastiques 36A, 36B sont formés par des ressorts hélicoïdaux d'axe principal d'orientation sensiblement circonférentielle.

Chaque organe élastique 36A, 36B comporte une première face 38A d'extrémité amont et une deuxième face 38B opposée d'extrémité aval.

Comme cela est visible à la figure 1, les organes élastiques 36A, 36B sont agencés en série sur la circonférence d'un même cercle en entourant le bord 23 périphérique du voile 18 de manière que la deuxième face 38B d'extrémité aval d'un organe élastique 36A, 36B soit agencée circonférentiellement en vis-à-vis de la première face 38A d'extrémité amont de l'organe élastique 36B, 36A suivant selon un sens de rotation horaire.

Les organes élastiques 36A, 36B sont répartis en trois paires d'organes élastiques 36A, 36B. Les organes élastiques 36A, 36B de chaque paire sont logés circonférentiellement en série, c'est-à-dire bout à bout, entre deux pattes 22 de sortie du voile 18 de sortie. Chaque paire comporte ainsi un premier organe élastique 36A amont et un deuxième organe élastique 36B aval. Chacun desdits premier organe élastique 36A amont et deuxième organe élastique 36 B aval comporte une face amont 38A et une face aval 38B.

Les deux organes élastiques 36A, 36B de chaque paire étant montés en série, la face 38B aval d'extrémité de l'organe élastique 36A amont est susceptibles de prendre appui sur la face 38A amont d'extrémité de l'organe élastique 36B aval lors de la transmission d'un couple entre les rondelles 12A, 12B d'entrée et le voile 18 de sortie.

Pour que les organes élastiques 36A, 36B soient sollicités sensiblement selon leur axe principal circonférentiel, il est connu d'équiper le dispositif 10 d'amortissement avec un organe de phasage.

Un tel organe de phasage est ici formé d'une première rondelle 40A radiale de phasage avant et d'une deuxième rondelle 40B de phasage arrière. La deuxième rondelle 40B radiale de phasage est agencée parallèlement à la première rondelle 40A de phasage. Les rondelles 40A, 40B, de phasage sont agencées axialement de part et d'autre des rondelles 12A, 12B d'entrée et des organes élastiques 36A, 36B.

Comme illustré à la figure 3, la rondelle 40B de phasage arrière est fixée à la rondelle 40A de phasage avant par l'intermédiaire d'entretoises 41 d'axe axial. Chaque extrémité de l'entretoise 41 est fixée à une rondelle 40A, 40B, de phasage associée, ici par déformation de ladite extrémité, à la manière d'un rivet.

Les entretoises 41 permettent de maintenir les deux rondelles 40A, 40B, de phasage écartées axialement d'une distance constante. Lorsque les deux rondelles 40A, 40B, de phasage sont assemblées, leurs flasques sont écartés d'une distance suffisante pour permettre aux rondelles 12A, 12B d'entrée de tourner sans frottement.

La distance d'écartement axial entre les deux rondelles 40A, 40B, de phasage est inférieure au diamètre des organes élastiques 36A, 36B.

Les rondelles 40A, 40B, de phasage sont montées libres en rotation par rapport au voile 18 de sortie, d'une part, et par rapport aux rondelles 12A, 12B d'entrée, d'autre part.

La rondelle 40A de phasage avant est montée tournante librement sur une deuxième face cylindrique de guidage 42 du palier 28. La deuxième face cylindrique de guidage 42 est agencée axialement en avant de la première face cylindrique de guidage 26. La deuxième face cylindrique de guidage 42 présente un diamètre inférieur à celui de la première face cylindrique de guidage 26 du palier 28. Une face radiale d'épaulement 44 tournée vers l'avant sépare les deux faces cylindriques de guidage 26, 42.

La rondelle 40A de phasage avant est appuyée axialement vers l'arrière contre cette face d'épaulement 44 pour positionner axialement les rondelles 40A, 40B, de phasage par rapport aux rondelles 12A, 12B d'entrée.

Chaque rondelle 40A, 40B, de phasage est en outre ajourée de six fenêtres 46 dont chacune est agencée en coïncidence avec un organe élastique 36A, 36B associé, comme représenté aux figures 1 et 4.

Les fenêtres 46 sont séparées circonférentiellement les unes des autres alternativement par des pattes 48 radiales de phasage et par des pattes 49 de maintien. Chaque rondelle 40A, 40B, de phasage comporte ainsi trois pattes 48 de phasage et trois pattes 49 de maintien, une patte 48 de phasage alternant circonférentiellement avec une patte 49 de maintien.

Les pattes 48 de phasage de la première rondelle 40A de phasage sont agencées en coïncidence axiale avec les pattes 48 de phasage de la deuxième rondelle de phasage 40B. Il en est de même pour les pattes 49 de maintien.

Les pattes 48 de phasage sont représentées à la figure 3. Chaque patte 48 de phasage est incurvée vers la rondelle 12A, 12B d'entrée associée.

Comme représenté à la figure 3, chaque patte 48 de phasage est interposée circonférentiellement entre les deux organes élastiques 36A, 36B en série de chaque paire.

Chaque patte 48 de phasage est délimitée circonférentiellement par une première face 50A radiale amont de phasage, d'une part, et par une deuxième face 50B radiale aval de phasage, d'autre part. Les faces 50A, 50B de phasage amont et aval qui sont interposées entre les organes élastiques 36A, 36B d'une même paire sont ainsi portées par une patte radiale 48 commune de phasage.

Ainsi, la face 38B d'extrémité aval de chaque premier organe élastique 36A amont est susceptible de solliciter, ou d'être sollicitée par la face 50A radiale amont de phasage de la patte 48 de phasage associée, tandis que la face 38A d'extrémité amont de chaque deuxième organe élastique 36B aval est susceptible d'être sollicitée par, ou de solliciter, la face 50B radiale aval de phasage de la patte 48 de phasage associée de manière que les deux organes élastiques amont 36A et aval 36B de la paire soient montés en série par l'intermédiaire des rondelles 40A, 40B, de phasage.

Les pattes 49 de maintien sont représentées à la figure 2, elles présentent une forme identique à celle des pattes 48 de phasage.

Comme représenté aux figures 1 et 2, chaque patte 49 de maintien est interposée circonférentiellement entre deux paires d'organes élastiques 36A, 36B. Plus précisément, chaque patte 49 de maintien est interposée circonférentiellement entre l'organe élastique 36B aval d'une paire et l'organe élastique 36A amont de la paire suivante. Ainsi chaque patte 49 de maintien est agencée en coïncidence avec une patte 24 d'entrée et une patte 22 de sortie.

Chaque patte 49 de maintien est délimitée circonférentiellement par une première face 52A radiale amont de maintien, d'une part, et par une deuxième face 52B radiale aval de maintien, d'autre part.

Ainsi, la face 38B d'extrémité aval de chaque deuxième organe élastique 36B aval est susceptible de coopèrer avec la face 52A radiale amont de la patte 49 de maintien associée, tandis que la face 38A d'extrémité amont de chaque premier organe élastique 36A amont est susceptible de coopérer avec la face 52B radiale aval de maintien de la patte 49 de maintien associée.

Chaque organe élastique 36A, 36B est ainsi maintenu individuellement en position selon la direction circonférentielle entre une face de phasage 50A, 50B associée et une face de maintien 52A, 52B en vis-à-vis associée.

La distance "D" séparant une face 52A, 52B de maintien de la face 50B, 50A de phasage en vis-à-vis est au plus égale à la longueur circonférentielle de l'organe élastique 36A, 36B au repos.

Ainsi, lorsque les organes élastiques 36A amont ne sont pas sollicités pour le passage du couple, la face 38B aval de chaque organe élastique 36A amont est maintenue en appui circonférentiel contre la face 50A associée de phasage amont par la face 52B radiale associée de maintien aval en vis-à-vis qui est en contact avec la face 38A amont dudit organe élastique 36A amont reçu entre ladite face 50A de phasage amont et ladite face 52B de maintien aval.

De même, lorsque les organes élastiques 36B aval ne sont pas sollicités pour le passage du couple, la face 38A amont de chaque organe élastique 36B aval est maintenue en appui circonférentiel contre la face 50B associée de phasage aval par la face 52A radiale associée de maintien amont en vis-à-vis qui est en contact avec la face 38B aval dudit organe élastique 36B aval dudit organe élastique 36B aval reçu entre ladite face 50B de phasage aval et ladite face 52A de maintien amont.

De préférence, la distance "D" circonférentielle entre une face de phasage et la face de maintien en vis-à-vis est inférieure à la longueur de l'organe élastique au repos de manière que l'organe élastique soit reçu contraint circonférentiellement entre la patte 49 de maintien et la patte 48 de phasage

Les rondelles 40A, 40B, de phasage forment des organes de guidage pour les organes élastiques 36A, 36B. A cet effet, chaque fenêtre 46 est bordée :
- radialement vers l'intérieur par une languette 54 intérieure qui s'étend depuis un bord circonférentiel intérieur de la fenêtre 46, et
- radialement vers l'extérieur par une languette 56 extérieure qui s'étend depuis un bord circonférentiel extérieur de la fenêtre 46.

Les languettes 54, 56 forment une retenue axiale pour l'organe élastique 36A, 36B associé.

Chaque fenêtre 46 forme ainsi un logement pour recevoir un organe élastique 36A, 36B associé et pour les maintenir en position axialement et radialement. Les languettes 54, 56 et les bords des fenêtres 46 permettent ainsi d'emprisonner les organes élastiques 36A, 36B afin de les maintenir en position.

Etant donné que les rondelles 40A, 40B, de phasage sont liées en rotation avec la roue de turbine du convertisseur de couple, le dispositif 10 d'amortissement est susceptible de fonctionner selon deux modes :
- un premier mode de fonctionnement dit "verrouillé" dans lequel l'embrayage de verrouillage est dans un état embrayé et dans lequel le couple moteur est transmis depuis l'arbre moteur jusqu'aux rondelles 12A, 12B d'entrée de couple ;
- un deuxième mode de fonctionnement dit "transitoire" dans lequel l'embrayage de verrouillage est dans un état débrayé et dans lequel le couple moteur est transmis depuis l'arbre moteur jusqu'aux rondelles de phasage via la roue de turbine.

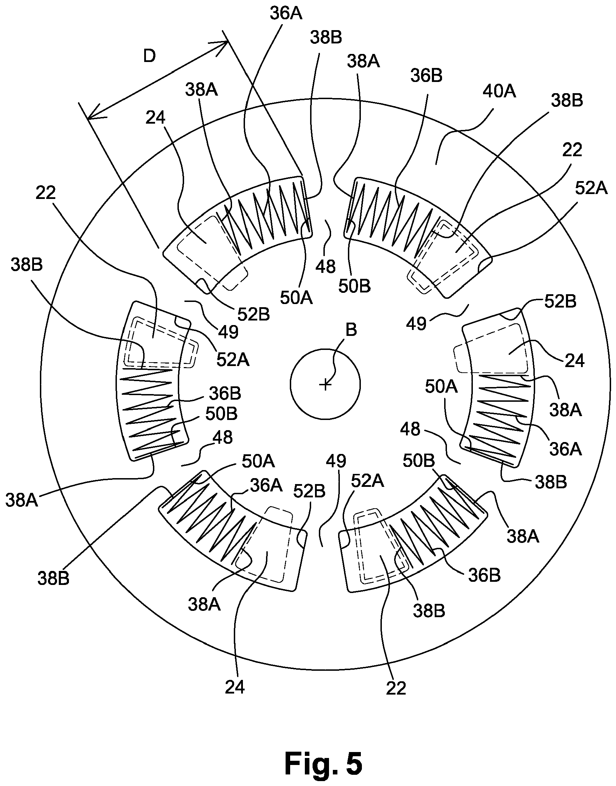

Le fonctionnement du dispositif 10 d'amortissement selon le premier mode "verrouillé" est illustré à la figure 5 dans laquelle la position des pattes 24 d'entrée a été schématisée en traits interrompus tandis que la position des pattes 22 de sortie a été schématisée en traits interrompus doublés. Dans ce premier mode de fonctionnement, les organes élastiques 36A, 36B de chaque paire sont comprimés entre les pattes 24 d'entrée et les pattes 22 de sortie de manière à amortir les variations brusques de couple.

Plus particulièrement, chaque patte 24 d'entrée sollicite l'organe élastique 36A amont associé. L'organe élastique 36A amont répercute cet effort sur le deuxième organe élastique 36B aval via la patte 48 de phasage. Enfin, le deuxième organe élastique 36B aval transmet l'effort à la patte 22 associée de sortie.

Les rondelles 12A, 12B d'entrée tournent d'un angle déterminé autour de l'axe "B" par rapport au voile 18 de sortie en provoquant la compression simultanée des deux organes élastiques 36A, 36B de chaque paire. Les pattes 48 de phasage des rondelles 40A, 40B, de phasage transmettent l'effort de compression d'un organe élastique 36A, 36B vers l'autre. Du fait de cette compression, les rondelles 40A, 40B, de phasage tournent de la moitié de l'angle déterminé par rapport aux rondelles 12A, 12B d'entrée.

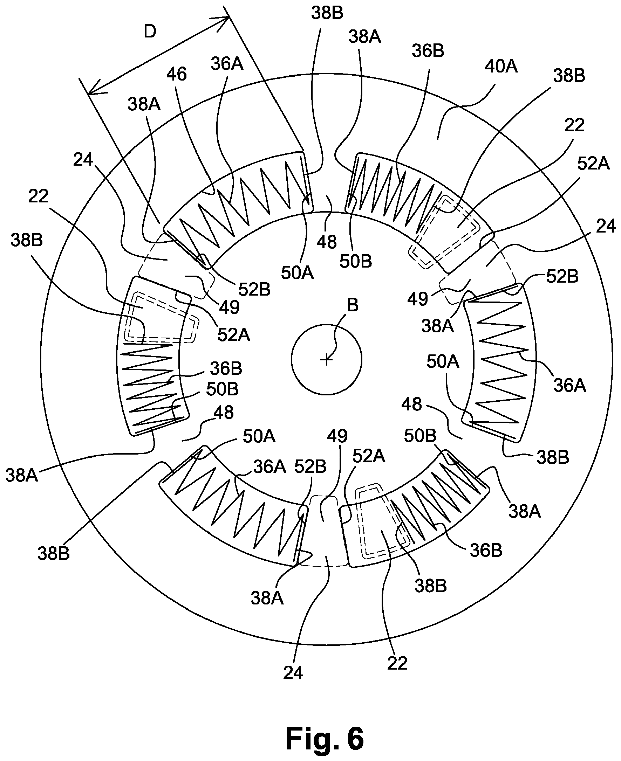

Le deuxième mode de fonctionnement "transitoire" est illustré à la figure 6. Dans ce deuxième mode de fonctionnement, une partie du couple moteur est transmise depuis les rondelles 40A, 40B, de phasage jusqu'au voile 18 de sortie via l'organe élastique 36B aval de chaque paire.

Aucun couple n'est transmis aux rondelles 12A, 12B d'entrée de couple. De ce fait, les organes élastiques 36A amont ne sont pas sollicités.

Ainsi, seuls les organes élastiques 36B aval sont comprimés. Les organes élastiques 36A amont sont immobilisés circonférentiellement entre la face 52B de maintien aval des pattes 49 de maintien et la face 50B de phasage amont des pattes de phasage 48. Ainsi, les organes élastiques 36A amont ne sont pas susceptibles de coulisser circonférentiellement. Ceci assure un fonctionnement silencieux du dispositif 10 d'amortissement dans ce deuxième mode de fonctionnement.

## Revendications

1. Convertisseur hydrodynamique comportant une roue de turbine et un embrayage de verrouillage, ledit convertisseur hydrodynamique comportant:
- un dispositif (10) d'amortissement de torsion entre un arbre moteur et un arbre mené coaxiaux d'orientation axiale, le dispositif (10) comportant :
- un élément (12A, 12B) d'entrée de couple et un élément (18) de sortie de couple ;
- au moins un premier organe élastique (36A) amont à action circonférentielle dont une face (38A) d'extrémité circonférentielle amont est susceptible d'être sollicitée par l'élément (12A, 12B) d'entrée ou de le solliciter ;
- au moins un deuxième organe élastique (36B) aval à action circonférentielle dont une face (38B) d'extrémité circonférentielle aval est susceptible de solliciter ou d'être sollicitée par l'élément (18) de sortie ;
- au moins une première rondelle (40A, 40B) radiale de phasage, la face (38B) d'extrémité aval de chaque organe élastique (36A) amont étant susceptible de solliciter ou d'être sollicitée par une face (50A) radiale amont de phasage de la rondelle (40A, 40B) de phasage, et la face (38A) d'extrémité amont de chaque organe élastique (36B) aval étant susceptible d'être sollicitée par une face (50B) radiale aval de phasage de la rondelle (40A, 40B) de phasage ou de la solliciter de manière que les deux organes élastiques (36A, 36B) soient montés en série ;
chaque organe élastique (36A, 36B) étant reçu circonférentiellement entre la face (50A, 50B) de phasage associée et une face (52B, 52A) radiale associée de maintien en vis-à-vis de la rondelle (40A, 40B) de phasage, la distance (D) circonférentielle entre une face (50A, 50B) de phasage et la face (52B, 52A) de maintien en vis-à-vis étant au plus égale à la longueur circonférentielle de l'organe élastique au repos,
ledit dispositif **caractérisé en ce que**:
- chaque rondelle (40A, 40B) de phasage est liée en rotation avec la roue de turbine tandis que l'élément (12A, 12B) d'entrée est lié en rotation avec l'embrayage de verrouillage.

2. Convertisseur selon la revendication 1, **caractérisé en ce que** la distance (D) circonférentielle entre chaque face (50A, 50B) de phasage et la face (52B, 52A) de maintien en vis-à-vis est inférieure à la longueur de l'organe élastique (36A, 36B) au repos de manière que l'organe élastique (36A, 36B) soit reçu contraint circonférentiellement entre la face (52A, 52B) de maintien et la face (50B, 50A) de phasage associée.

3. Convertisseur selon l'une des revendications 1 ou 2, **caractérisé en ce que** les organes élastiques (36A, 36B) du le dispositif (10) d'amortissement sont agencés sur la circonférence d'un même cercle, les faces (50A, 50B) de phasage étant ainsi portées par une patte (48) radiale commune de phasage de la rondelle (40A, 40B) de phasage qui est interposée entre l'organe élastique (36A) amont et l'organe élastique (36B) aval.

4. Convertisseur selon l'une quelconque des revendications 1 à 3, **caractérisé en ce que** le dispositif (10) d'amortissement comporte deux rondelles (40A, 40B) de phasage qui sont agencées axialement de part et d'autres des éléments (12A, 12B, 18) d'entrée et de sortie et qui sont fixées l'une sur l'autre, et **en ce que** les rondelles (40A, 40B) de phasage comportent des moyens pour emprisonner les organes élastiques (36A, 36B) afin de les maintenir axialement et radialement en position.

## Patentansprüche

1. Hydrodynamischer Konverter, aufweisend ein Turbinenrad und eine Verriegelungskupplung, wobei der hydrodynamische Konverter aufweist:
- eine Drehschwingungsdämpfvorrichtung (10) zwischen einer Motorwelle und einer koaxialen, axial ausgerichteten geführten Welle, wobei die Vorrichtung (10) aufweist:
- ein Kraftmomenteingangselement (12A, 12B) und ein Kraftmomentausgangselement (18);
- mindestens ein vorgelagertes erstes elastisches Organ (36A) mit Umfangswirkung, von dem eine vorgelagerte Umfangs-Endfläche (38A) in der Lage ist, von dem Eingangselement (12A, 12B) beansprucht zu werden oder es zu beanspruchen;
- mindestens ein nachgelagertes zweites elastisches Organ (36B) mit Umfangswirkung, von dem eine nachgelagerte Umfangs-Endfläche (38B) in der Lage ist, das Ausgangselement (18) zu beanspruchen oder von ihm beansprucht zu werden;
- mindestens eine erste radiale Phasenunterlegscheibe (40A, 40B), wobei die nachgelagerte Endfläche (38B) jedes vorgelagerten elastischen Organs (36A) in der Lage ist, eine vorgelagerte radiale Phasenfläche (50A) der Phasenunterlegscheibe (40A, 40B) zu beanspruchen oder von ihr beansprucht zu werden, und die vorgelagerte Endfläche (38A) jedes nachgelagerten elastischen Organs (36B) in der Lage ist, von einer nachgelagerten radialen Phasenfläche (50B) der Phasenunterlegscheibe (40A, 40B) beansprucht zu werden oder sie zu beanspruchen, derart, dass die zwei elastischen Organe (36A, 36B) in Reihe montiert sind;
wobei jedes elastische Organ (36A, 36B) umfangsmäßig zwischen der zugeordneten Phasenfläche (50A, 50B) und einer zugeordneten radialen Haltefläche (52B, 52A) gegenüber der Phasenunterlegscheibe (40A, 40B) aufgenommen ist, wobei der Umfangsabstand (D) zwischen einer Phasenfläche (50A, 50B) und der Haltefläche (52B, 52A) gegenüber höchstens gleich der Umfangslänge des elastischen Organs in Ruhe ist, wobei die Vorrichtung **dadurch gekennzeichnet ist, dass**:
- jede Phasenunterlegscheibe (40A, 40B) mit dem Turbinenrad rotierend verbunden ist, wogegen das Eingangselement (12A, 12B) mit der Verriegelungskupplung rotierend verbunden ist.

2. Konverter nach Anspruch 1, **dadurch gekennzeichnet, dass** der Umfangsabstand (D) zwischen jeder Phasenfläche (50A, 50B) und der Haltefläche (52B, 52A) gegenüber kleiner als die Länge des elastischen Organs (36A, 36B) in Ruhe ist, derart, dass das elastische Organ (36A, 36B) umfangsmäßig gespannt zwischen der Haltefläche (52A, 52B) und der zugeordneten Phasenfläche (50B, 50A) aufgenommen ist.

3. Konverter nach einem der Ansprüche 1 oder 2, **dadurch gekennzeichnet, dass** die elastischen Organe (36A, 36B) der Dämpfungsvorrichtung (10) auf dem Umfang desselben Kreises eingerichtet sind, wobei die Phasenflächen (50A, 50B) somit von einem gemeinsamen radialen Phasenfuß (48) der Phasenunterlegscheibe (40A, 40B) getragen werden, der zwischen dem vorgelagerten elastischen Organ (36A) und dem nachgelagerten elastischen Organ (36B) angeordnet ist.

4. Konverter nach einem der Ansprüche 1 bis 3, **dadurch gekennzeichnet, dass** die Dämpfungsvorrichtung (10) zwei Phasenunterlegscheiben (40A, 40B) aufweist, die axial beiderseits des Eingangs- und des Ausgangselements (12A, 12B, 18) eingerichtet sind und die aufeinander befestigt sind, und dass die Phasenunterlegscheiben (40A, 40B) Mittel aufweisen, um die elastischen Organe (36A, 36B) einzuschließen, um sie axial und radial in Position zu halten.

## Claims

1. Hydrodynamic converter comprising a turbine wheel and a locking clutch, said hydrodynamic converter comprising:
- a torsion damping device (10) between a motor shaft and a driven shaft that are coaxial of axial orientation, the device (10) comprising:
- a torque input element (12A, 12B) and a torque output element (18);
- at least one first upstream elastic member (36A) with circumferential action whose upstream circumferential end face (38A) is capable of being stressed by the input element (12A, 12B) or of stressing it;
- at least one second downstream elastic member (36B) with circumferential action whose downstream circumferential end face (38B) is capable of stressing or being stressed by the output element (18);
- at least one first radial phase washer (40A, 40B), the downstream end face (38B) of each upstream elastic member (36A) being capable of stressing or being stressed by an upstream phasing radial face (50A) of the phase washer (40A, 40B), and the upstream end face (38A) of each downstream elastic member (36B) being capable of being stressed by a downstream phasing radial face (50B) of the phase washer (40A, 40B) or of stressing it so that the two elastic members (36A, 36B) are mounted in series;
each elastic member (36A, 36B) being received circumferentially between the associated phasing face (50A, 50B) and an associated holding radial face (52B, 52A) facing the phase washer (40A, 40B), the circumferential distance (D) between a phasing face (50A, 50B) and the facing holding face (52B, 52A) being at most equal to the circumferential length of the elastic member at rest
said device **characterized in that**:
- each phase washer (40A, 40B) is linked in rotation with the turbine wheel while the input element (12A, 12B) is linked in rotation with the locking clutch.

2. Converter according to Claim 1, **characterized in that** the circumferential distance (D) between each phasing face (50A, 50B) and the facing holding face (52B, 52A) is less than the length of the elastic member (36A, 36B) at rest so that the elastic member (36A, 36B) is received constrained circumferentially between the holding face (52A, 52B) and the associated phasing face (50B, 50A).

3. Converter according to one of Claims 1 and 2, **characterized in that** the elastic members (36A, 36B) of the damping device (10) are arranged on the circumference of one and the same circle, the phasing faces (50A, 50B) being thus borne by a common phasing radial tab (48) of the phase washer (40A, 40B) which is interposed between the upstream elastic member (36A) and the downstream elastic member (36B).

4. Converter according to any one of Claims 1 to 3, **characterized in that** the damping device (10) comprises two phase washers (40A, 40B) which are arranged axially on either side of the input and output elements (12A, 12B, 18) and which are fixed to one another, and **in that** the phase washers (40A, 40B) comprise means for trapping the elastic members (36A, 36B) in order to hold them axially and radially in position.
